# FASCICULE DE BREVET EUROPEEN

(11) **EP 3 909 809 B1**
(45) Date de publication et mention de la délivrance du brevet: **08.06.2022**
(21) Numéro de dépôt: 21164937.1
(22) Date de dépôt: 25.03.2021
(51) Int. Cl.: B60P 3/00, B60P 1/64, B65G 1/00, B66F 9/06

(54) **DISPOSITIF DE TRANSPORT D'OBJETS COMPORTANT UNE NAVETTE AUTOGUIDÉE**
VORRICHTUNG ZUM TRANSPORT VON GEGENSTÄNDEN, DIE EIN SELBSTGESTEUERTES SHUTTLE
DEVICE FOR TRANSPORTING OBJECTS COMPRISING A SELF-GUIDED SHUTTLE

(30) Priorité: 15.05.2020 FR 2004812
(43) Date de publication de la demande: 17.11.2021
(73) Titulaire: Solystic, 92220 Bagneux (FR)
(72) Inventeur: MIETTE, Emmanuel, 95210 SAINT GRATIEN (FR); CAILLON, Christophe, 91220 BRETIGNY SUR ORGE (FR)
(74) Mandataire: Prugneau, Philippe

(56) Documents cités:
- EP-A1- 3 369 696
- EP-A1- 3 564 164
- WO-A1-2019/141257
- DE-U1-202011 050 891

## Description

### Domaine technique

Le domaine de l'invention est celui des dispositifs de transport d'objets tels que colis, paquets ou bacs utilisés dans les plateformes logistiques.

### Technique antérieure

Le document WO 2019/141257 A1 divulgue un dispositif de transport d'objets selon le préambule de la revendication 1.

Dans les plateformes logistiques, les objets à manipuler peuvent être transportés avec des chariots ayant un socle rectangulaire équipé de roulettes libres à ses quatre coins et portant un conteneur en forme de cage pour entreposer les objets à transporter. Ces chariots-cages roulants sont généralement poussés manuellement ou avec un transpalette manuel ou motorisé. Le poids en charge de ces chariots-cages peut atteindre 200 à 300 kg.

On connait aussi du document de brevet EP-3564164 un dispositif de transport automatique d'objets pour transporter automatiquement des objets tels que colis, paquets ou bacs dans une plateforme logistique de tri postal par exemple. Ce dispositif connu comprend un chariot de transport adapté pour le transport d'un objet unique et équipé de roulettes libres et une navette autoguidée roulante agencée pour être accouplée au chariot de façon à le déplacer avec son chargement en le poussant ou en le tractant dans la plateforme logistique.

Le but de l'invention est de proposer un dispositif de transport tel qu'indiqué plus haut avec une navette qui s'adapte à la cinématique de déplacement d'un chariot-cage notamment à une cinématique du type tricycle ou voiture, sans le porter et offrant une grande compacité de manœuvre tant dans le déplacement de l'équipage navette-chariot que dans la phase d'approche de la navette vers le chariot pour réaliser l'attelage.

### Résumé de l'invention

A cet effet, l'invention a pour objet un dispositif de transport d'objets pour transporter des objets tels que colis, paquets ou bacs dans une plateforme logistique, comprenant une navette roulante autoguidée agencée pour être accouplée à un chariot roulant de transport des objets de façon à le déplacer avec son chargement dans la plateforme logistique, ce chariot roulant étant déplaçable selon un modèle cinématique de type tricycle ou voiture, caractérisé en ce que la navette comporte des roues motrices omnidirectionnelles pour se déplacer de façon holonome, en ce que la navette et le chariot sont conçus pour s'encastrer l'un dans l'autre de telle façon que les roues motrices de la navette viennent se placer globalement autour des roues du chariot et en ce que les roues motrices de la navette sont asservies pour suivre la cinématique des roues du chariot.

Le dispositif selon l'invention peut présenter les particularités suivantes.

La navette présente avantageusement une forme globale en U avec une base et deux bras parallèles perpendiculaires à la base, les bras du U étant munis chacun d'une roue motrice directrice à leur extrémité libre et la base du U étant munie d'une paire de roues motrices directrices disposées respectivement aux deux extrémités opposées de la base du U qui rejoignent les bras et le chariot comporte un socle rectangulaire équipé de roulettes et un conteneur sur le dessus du socle pour entreposer les objets à transporter, les deux bras du U de la navette venant épouser par l'extérieur deux flancs opposés et parallèles du socle de telle façon à ce que les roues de la navette viennent se placer globalement autour des roulettes du chariot quand le socle du chariot est encastré dans la navette.

Le chariot peut comporter deux roues freinées et la navette peut comporter sur ses bras un organe de levage pour soulever le socle du chariot au niveau des roues freinées quand le socle du chariot est encastré dans la navette.

La navette peut comporter des capteurs LIDAR et une électronique qui en réponse à la détection d'une situation de collision, active l'organe de levage pour reposer les roues au sol.

Le chariot peut avoir une face munie d'un catadioptre détectable par des capteurs optiques de la navette et la navette peut comporter une électronique de guidage qui est agencée pour provoquer l'encastrement du socle du chariot dans la navette par le côté de la face du chariot portant le catadioptre.

Un exemple de machine de tri selon l'invention est illustré par les dessins.

### Présentation des dessins

[Fig.1] La figure 1 montre de façon très schématique un équipage navette-chariot selon l'invention non encore accouplé.
[Fig.2] La figure 2 montre de façon très schématique l'équipage navette-chariot de la figure 1 mais en position d'accouplement c'est-à-dire d'encastrement du chariot dans la navette selon l'invention.
[Fig.3] illustre l'asservissement des roues de la navette pour suivre la cinématique du chariot logistique.

### Description des modes de réalisation

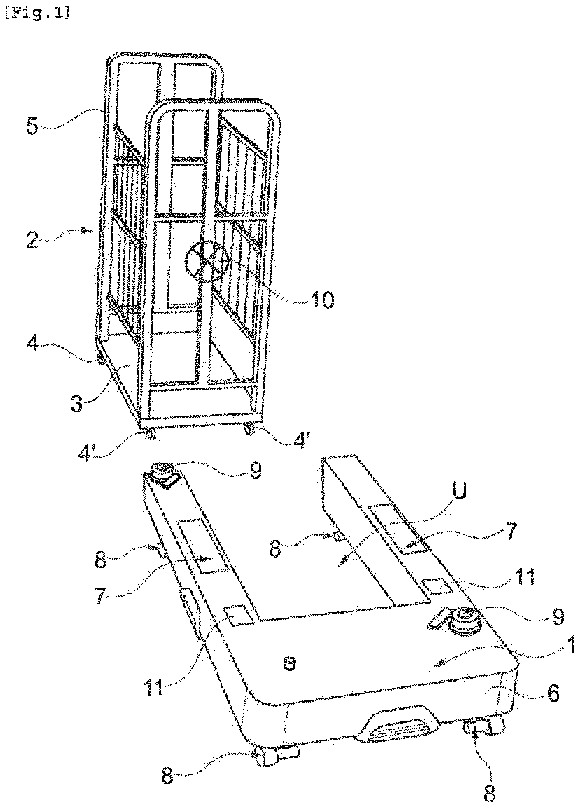

Sur la figure 1, on a représenté de façon très schématique en perspective une navette 1 autoguidée roulante et un chariot 2 destiné à former un équipage pour déplacer de façon automatique des objets divers non représentés, comme des colis ou paquets ou encore des bacs de courrier dans une plateforme logistique de tri postal par exemple.

Le chariot 2 comporte ici un socle rectangulaire 3 et a une cinématique de déplacement de type tricycle ou voiture. Il comprend ici à l'avant deux roues folles 4 et à l'arrière deux roues fixes 4'.

Un conteneur 5 en forme de cage est fixé sur le dessus du socle 3. Ce conteneur sert à entreposer en vrac les objets à transporter.

La navette 1 autoguidée roulante selon l'invention comporte des roues motrices omnidirectionnelles 8 pour se déplacer de façon holonome.

Selon l'invention, la navette 1 et le chariot 2 sont conçus pour s'encastrer mutuellement l'un dans l'autre de telle façon que les roues motrices omnidirectionnelles 8 de la navette viennent se placer globalement autour des roues 4,4' du chariot et les roues motrices omnidirectionnelles 8 de la navette sont asservies (en orientation dans l'espace suivant l'axe vertical) pour suivre la cinématique des roues 4,4' du chariot.

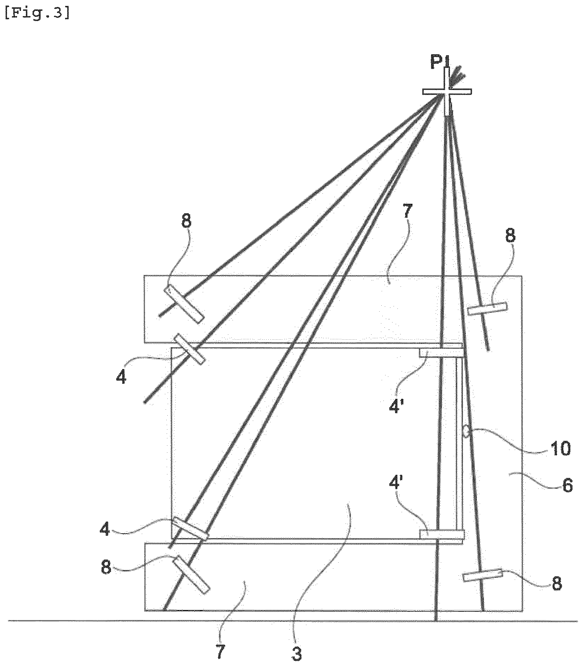

En d'autres termes, la navette est asservie pour copier la cinématique tricycle ou voiture du chariot et comme illustré sur la figure 3, l'asservissement peut consister en une orientation pilotée des roues 8 de la navette de telle façon à ce que les génératrices des roues 4,4' du chariot 2 et les génératrices des roues 8 de la navette 1 se croisent en un point de coïncidence P.

Dans un mode de réalisation préféré de l'invention, la navette 1 présente un châssis ayant une forme globale en U avec une base 6 et deux bras 7 parallèles perpendiculaires à la base.

Les bras du U sont munis chacun d'une roue motrice omnidirectionnelle 8 à leur extrémité libre et la base du U est munie d'une paire de roues motrices omnidirectionnelles 8 disposées respectivement aux deux extrémités opposées de la base du U qui rejoignent les bras. Avec ces roues motrices directrices disposées ainsi, la navette est dotée d'une capacité de déplacement holonome.

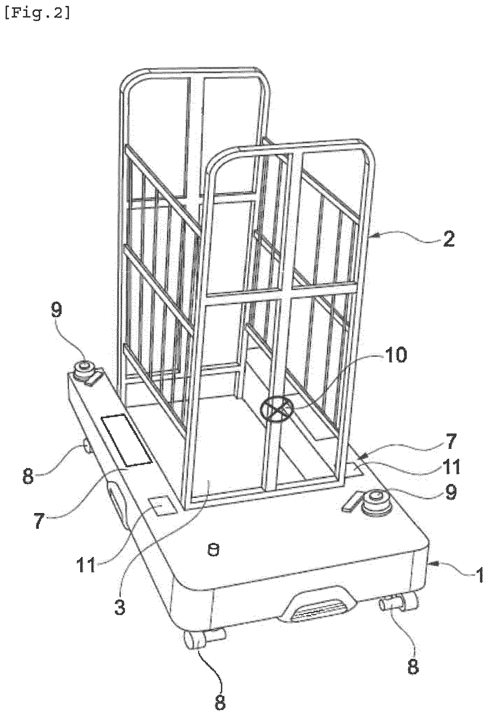

Sur la figure 2, le chariot 2 est encastré dans le U de la navette contre la base du U du châssis de la navette et entre les deux bras du U du châssis de la navette.

En particulier sur la figure 2, les deux bras 7 du U viennent épouser par l'extérieur deux flancs opposés et parallèles du socle 3 du chariot de telle façon à ce que les roues motrices et directrices 8 de la navette viennent se placer globalement autour des roues 4,4' du chariot quand le socle du chariot est encastré dans la navette ce qui a pour effet que le chariot peut être guidé en déplacement holonome par la navette. A noter que dans le cas d'exemple de la figure 3, les roues 8 à l'avant des bras 7 sont devant les roues avant 4 du chariot ce qui confère une grande motricité à la navette pour déplacer le chariot.

On comprendra que l'écartement des deux bras correspond (avec un certain jeu) à la largeur du socle entre les deux flancs opposés du socle.

La navette est équipée de moteurs électriques pour entrainer les roues motrices. Une électronique de contrôle/commande est prévue pour commander ces moteurs tant pendant le déplacement de la navette que pour les phases de démarrage et d'arrêt et aussi pour asservir l'orientation des roues à celles du chariot.

La navette est guidée automatiquement en déplacement par exemple à l'aide de QR codes collés au sol de la plateforme qui sont lus par une caméra embarquée sur la navette.

Il peut être prévu un affichage par LED au sol de l'état instantané de la navette pour un contrôle visuel par Opérateur.

Un système de télédétection 9 par laser ou LIDAR peut également être embarqué sur la navette pour détecter des obstacles par exemple ou encore pour détecter un catadioptre 10 placé sur une face du chariot de façon à orienter la navette pour réaliser l'encastrement dans le bon sens du chariot.

Dans l'exemple de réalisation illustré sur les figures, un LIDAR 9 est disposé à une extrémité libre d'un bras du U et un autre lidar 9 est disposé sur une extrémité de la base du U opposée à cette extrémité du bras selon une diagonale.

Chaque LIDAR peut balayer un angle de 270° et les deux LIDAR peuvent donc surveiller tout un plan horizontal au-dessus du sol pour détecter de possibles situations de collision. Les LIDAR peuvent être complétés par des capteurs à ultra-son qui couvrent des cônes de détection autour de la navette. Les LIDAR sont exploités par la commande électronique de la navette pour ajuster finement le déplacement de la navette par rapport au chariot pendant la phase d'approche du chariot.

L'arrimage du chariot à la navette peut être réalisé par un système de crochets articulés sur le châssis de la navette et qui viennent se fermer automatiquement sur des montants verticaux du chariot.

Pour des raisons de sécurité dans la plateforme logistique, on peut prévoir d'utiliser un chariot à roues freinées. Deux roues du chariot, par exemple les deux roues 4' placées du côté de la face portant le catadioptre, ont un frein toujours activé, lequel peut être désactivé mais par une manœuvre précise par exemple d'un Opérateur humain.

Dans cette situation, il est prévu sur chaque bras du châssis en U, un organe de levage 11, par exemple un vérin à vis ou un coussin d'air gonflable, qui permet de soulever de quelques centimètres le chariot au niveau des roues freinées quand le chariot est encastré dans la navette. En cas de situation de collision détectée par l'électronique de commande la navette, l'organe de levage est activé en urgence pour reposer les roues freinées du chariot au sol. Ce système présente plusieurs avantages.

D'abord il n'est pas nécessaire de désactiver le frein des roues du chariot pour que la navette déplace le chariot au sol. Le transfert de poids sur les roues de la navette crée un supplément d'adhérence de la navette au sol.

Ces navettes à châssis en forme de U peuvent être exploitées en combinaison avec des navettes autoguidées telles que décrites dans le brevet EP-3564164 précisément pour le transport de bacs de lettres dans une plateforme logistique de tri postal.

## Revendications

1. Dispositif de transport d'objets pour transporter des objets tels que colis, paquets ou bacs dans une plateforme logistique, comprenant une navette (1) roulante autoguidée agencée pour être accouplée à un chariot roulant (2) de transport des objets de façon à le déplacer avec son chargement dans la plateforme logistique, ce chariot roulant étant déplaçable selon un modèle cinématique de type tricycle ou voiture, la navette comportant des roues motrices omnidirectionnelles pour se déplacer de façon holonome, **caractérisé en ce que** la navette et le chariot sont conçus pour s'encastrer l'un dans l'autre de telle façon que les roues motrices de la navette viennent se placer globalement autour des roues du chariot et **en ce que** les roues motrices de la navette sont asservies pour suivre la cinématique des roues du chariot.

2. Dispositif selon la revendication 1, **caractérisé en ce que** la navette présente une forme globale en U avec une base (6) et deux bras (7) parallèles perpendiculaires à la base, les bras du U étant munis chacun d'une roue motrice directrice (8) à leur extrémité libre et la base du U étant munie d'une paire de roues motrices directrices (8) disposées respectivement aux deux extrémités opposées de la base du U qui rejoignent les bras et **en ce que** le chariot (2) comporte un socle (3) rectangulaire équipé de roulettes et un conteneur sur le dessus du socle (4) pour entreposer les objets à transporter, et **en ce que** les deux bras du U de la navette viennent épouser par l'extérieur deux flancs opposés et parallèles du socle de telle façon à ce que les roues de la navette viennent se placer globalement autour des roulettes du chariot quand le socle du chariot est encastré dans la navette.

3. Dispositif selon la revendication 2, **caractérisé en ce que** le chariot comporte deux roues freinées (4) et **en ce que** la navette comporte sur ses bras un organe de levage (11) pour soulever le socle du chariot au niveau des roues freinées quand le socle du chariot est encastré dans la navette.

4. Dispositif selon la revendication 3, **caractérisé en ce que** la navette comporte des capteurs LIDAR (9) et une électronique qui en réponse à la détection d'une situation de collision, active l'organe de levage pour reposer les roues au sol.

5. Dispositif selon l'une des revendications 2 à 4, **caractérisé en ce que** le chariot a une face munie d'un catadioptre (10) détectable par des capteurs optiques de la navette et **en ce que** la navette comporte une électronique de guidage qui est agencée pour provoquer l'encastrement du socle du chariot dans la navette par le côté de la face du chariot portant le catadioptre.

## Patentansprüche

1. Vorrichtung zum Transport von Gegenständen wie Paketen, Päckchen oder Behältern in einer Logistikplattform, umfassend ein selbstgesteuertes rollendes Shuttle (1), das so angeordnet ist, dass es derart an einen Rollwagen (2) zum Transportieren von Gegenständen gekoppelt werden kann, dass es mit seiner Ladung in der Logistikplattform bewegt wird, wobei der Rollwagen gemäß einem kinematischen Modell eines Dreirads oder Autos beweglich ist, das Shuttle omnidirektionale Antriebsräder aufweist, um sich holonomisch zu bewegen, **dadurch gekennzeichnet, dass** das Shuttle und der Wagen so gestaltet sind, dass sie derart ineinander geschoben werden können, dass die Antriebsräder des Shuttles im Allgemeinen um die Räder des Wagens herum zu liegen kommen, und dass die Antriebsräder des Shuttles zwangsgesteuert sind, um der Kinematik der Räder des Wagens zu folgen.

2. Vorrichtung nach Anspruch 1, **dadurch gekennzeichnet, dass** das Shuttle im Allgemeinen eine U-Form mit einer Basis (6) und zwei zur Basis senkrechten parallelen Armen (7) aufweist, wobei die Arme des U an ihrem freien Ende jeweils mit einem lenkbaren Antriebsrad (8) versehen sind und die Basis des U mit einem Paar lenkbarer Antriebsräder (8) versehen ist, die jeweils an den beiden sich gegenüberliegenden Enden der Basis des U angeordnet sind, die mit den Armen verbunden sind, und dass der Wagen (2) einen rechteckigen Sockel (3), der mit Rollen ausgestattet ist, und einen Behälter auf der Oberseite des Sockels (4) zur Aufbewahrung der zu transportierenden Gegenstände aufweist und dass die beiden Arme des U des Shuttles sich von außen an zwei sich gegenüberliegende und parallele Flanken des Sockels anschmiegen, so dass die Räder des Shuttles im Allgemeinen um die Rollen des Wagens herum zu liegen kommen, wenn der Sockel des Wagens in das Shuttle geschoben ist.

3. Vorrichtung nach Anspruch 2, **dadurch gekennzeichnet, dass** der Wagen zwei gebremste Räder (4) aufweist und dass das Shuttle an seinen Armen ein Hebeorgan (11) aufweist, um den Sockel des Wagens auf Höhe der gebremsten Räder anzuheben, wenn der Sockel des Wagens in das Shuttle geschoben ist.

4. Vorrichtung nach Anspruch 3, **dadurch gekennzeichnet, dass** das Shuttle LIDAR-Sensoren (9) und eine Elektronik aufweist, die als Reaktion auf die Erfassung einer Kollisionssituation das Hebeorgan aktiviert, um die Räder wieder auf den Boden zu bringen.

5. Vorrichtung nach einem der Ansprüche 2 bis 4, **dadurch gekennzeichnet, dass** der Wagen eine Seite hat, die mit einem Rückstrahler (10) versehen ist, der von den optischen Sensoren des Shuttles erfasst werden kann, und dass das Shuttle eine Führungselektronik umfasst, die so ausgelegt ist, dass sie das Einschieben des Wagensockels in das Shuttle von der Seite der Seite des Wagens, die den Rückstrahler trägt, bewirkt.

## Claims

1. Object transport device for transporting objects such as parcels, packages, or bins in a logistics platform, comprising a self-guided rolling shuttle (1) arranged to be coupled to a rolling trolley (2) for transporting objects so as to move said trolley, together with its load, in the logistics platform, this rolling trolley being movable according to a kinematic model of the tricycle or car type, the shuttle comprising omnidirectional driving wheels for moving in a holonomic manner, **characterized in that** the shuttle and the trolley are designed to fit one inside the other in such a way that the driving wheels of the shuttle are placed generally around the wheels of the trolley and **in that** the driving wheels of the shuttle are controlled so as to follow the kinematics of the wheels of the trolley.

2. Device according to claim 1, **characterized in that** the shuttle has an overall U-shape with a base (6) and two parallel arms (7) perpendicular to the base, the arms of the U each being provided with a steered driving wheel (8) at the free end thereof and the base of the U being provided with a pair of steered driving wheels (8) arranged respectively at the two opposite ends of the base of the U which join the arms, and **in that** the trolley (2) comprises a rectangular bottom (3) equipped with castors and a container on top of the bottom (4) for storing the objects to be transported, and **in that** the two arms of the U of the shuttle surround, from the outside, two opposite and parallel sides of the bottom in such a way that the wheels of the shuttle are placed generally around the castors of the trolley when the bottom of the trolley is fitted into the shuttle.

3. Device according to claim 2, **characterized in that** the trolley comprises two braked wheels (4) and **in that** the shuttle comprises, on its arms, a lifting member (11) for lifting the bottom of the trolley at the braked wheels when the bottom of the trolley is fitted into the shuttle.

4. Device according to claim 3, **characterized in that** the shuttle comprises LIDAR sensors (9) and electronics which, in response to the detection of a collision situation, activate the lifting member to rest the wheels on the ground.

5. Device according to any of claims 2 to 4, **characterized in that** the trolley has a face provided with a reflector (10) detectable by optical sensors of the shuttle and **in that** the shuttle comprises guidance electronics which are arranged to cause the trolley bottom to be fitted into the shuttle from the side of the face of the trolley carrying the reflector.
